# EUROPÄISCHE PATENTSCHRIFT

(11) **EP 3 409 181 B1**
(45) Veröffentlichungstag und Bekanntmachung des Hinweises auf die Patenterteilung: **16.03.2022**
(21) Anmeldenummer: 18174552.2
(22) Anmeldetag: 28.05.2018
(51) Int. Cl.: D06F 39/00, A47L 15/42

(54) **WASCHMASCHINE, INSBESONDERE HAUSHALTSGESCHIRRSPÜLMASCHINE**
DISHWASHER, ESPECIALLY DOMESTIC DISHWASHER
MACHINE À LAVER, EN PARTICULIER LAVE-VAISSELLE DOMESTIQUE

(30) Priorität: 29.05.2017 DE 102017111581
(43) Veröffentlichungstag der Anmeldung: 05.12.2018
(73) Patentinhaber: Miele & Cie. KG, 33332 Gütersloh (DE)
(72) Erfinder: Bertram, Andre, 33609 Bielefeld (DE); Dahms, Tobias, 30519 Hannover (DE); Wolf, Cornelius, 33739 Bielefeld (DE); Steinmeier, Ralph, 32052 Herford (DE); Tegeler, Daniel, 33649 Bielefeld (DE)

(56) Entgegenhaltungen:
- EP-A2- 2 430 967
- DE-A1-102014 200 774

## Beschreibung

Die Erfindung betrifft eine Waschmaschine, etwa eine Textilwaschmaschine oder eine Geschirrspülmaschine, insbesondere eine Haushaltsgeschirrspülmaschine, mit einem einen Wasch-/Spülraum bereitstellenden Wasch-/Spülbehälter, der der Aufnahme von zu reinigendem Wasch-/Spülgut dient, und an den an zumindest einer Wasch-/Spülbehälterwand, insbesondere Seiten-, Decken- oder Bodenwand, außenseitig eine Isolierung angebracht ist, und mit einem außerhalb des Wasch-/Spülbehälters angeordneten, während des Betriebs der Waschmaschine zumindest zeitweise wärmeabgebenden Bauteil.

Waschmaschinen der eingangs genannten Art sind aus dem Stand der Technik an sich wohlbekannt. Eines gesonderten druckschriftlichen Nachweises bedarf es an dieser Stelle deshalb nicht.

Vorbekannte Waschmaschinen verfügen über einen Spülbehälter, auch Bottich genannt, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Wäsche oder um Geschirr, Besteckteile und/oder dergleichen handeln kann.

Zur Beaufschlagung von zu reinigendem Spülgut mit Spülflüssigkeit, der sog. Spülflotte, verfügt eine Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Waschmaschinen der eingangs genannten Art können bekanntermaßen mit einer Wärmepumpeneinrichtung ausgestattet sein, um den Energieverbrauch insbesondere bei einem Aufheizen der Spülflotte zu reduzieren, insbesondere deshalb, weil ein solches Aufheizen der Spülflotte bei einer Geschirrspülmaschine den größten Teil am Energieverbrauch ausmacht.

Aus der EP 2 682 038 A2 ist eine Geschirrspülmaschine mit einer Luft-Wasser-Wärmepumpeneinrichtung bekannt. Im Betriebsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Die Wärmepumpeneinrichtung verfügt zu diesem Zweck in an sich bekannter Weise über einen Verdampfer, einen Verdichter, einen Verflüssiger und einen diese Komponenten miteinander strömungstechnisch verbindenden Strömungs- oder Umwälzkreislauf. Dabei dient der Verflüssiger als Wärmetauscher, mittels dem Wärmeenergie von einem im Strömungskreislauf der Wärmepumpeneinrichtung umgewälzten Arbeitsmedium auf die Spülflotte übertragen wird.

Im bestimmungsgemäßen Verwendungsfall der Wärmepumpeneinrichtung wird zwecks Aufheizung der Spülflotte mittels Ventilatoren Raumluft angesaugt und über den Verdampfer der Wärmepumpeneinrichtung geleitet. Dies führt zu einer Abkühlung der zugeführten Raumluft, wobei die der Raumluft entzogene Wärmeenergie auf das Arbeitsmedium übertragen wird, das infolge dessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei frei werdende Wärmeenergie dient der Spülflottenaufheizung.

Die EP 2430967 A2 offenbart eine Geschirrspülmaschine mit einem Spülbehälter, an den an mehreren Spülbehälterwänden, außenseitig eine Entdröhnungs- oder Schalldämmungsbeschichtung angebracht ist. Diese weist im Bereich des Sammeltopfes eine Ausnehmung auf. Die DE 102014200774 A1 offenbart eine Waschmaschine mit einem Laugenbehälter und einem außerhalb des Laugenbehälters angeordneten Antriebsmotor, wobei Abwärme des Antriebsmotors über ein wärmeleitendes Verbindungselement auf die Lauge im Laugenbehälter übertragen wird.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsatmosphäre, sondern einem Flüssigkeitsreservoir Wärmeenergie entzogen. Die EP 2 206 824 A2 sieht zu diesem Zweck einen geschlossenen Wassertank vor, der den Verdampfer der Wärmepumpeneinrichtung beherbergt. Im Betriebsfall kommt es infolge eines Wärmeenergieentzugs zu einer Abkühlung des im Tank bevorrateten Wassers. Dabei kann eine Abkühlung des Wassers bis zur Vereisung vorgenommen werden.

Im Übrigen ist es bekannt, den Spülbehälter aus energetischen Gründen mit einer Wärmedämmung zu versehen. Hierfür sind Wärmedämmmatten außenseitig am Spülbehälter mit denen ein Wärmeverlust aus dem aufgeheizten Spülraum vermieden oder vermindert werden soll.

Den vorbekannten Konstruktionen ist es systembedingt gemein, dass sich der Verdichter der Wärmepumpeneinrichtung bei einem Betrieb der Wärmepumpeneinrichtung aufheizt. Die infolge dessen vom Verdichter ausgehende Wärmestrahlung und Konvektion erwärmt in nachteiliger Weise unnötig dem Verdichter nebengeordnete Baukomponenten der Geschirrspülmaschine. Es kommt insoweit zu einem Energieentzug mit der Folge einer verringerten Energieeffizienz der Wärmepumpeneinrichtung, denn die zur Erwärmung der dem Verdichter nebengeordneten Baukomponenten der Geschirrspülmaschine benötigte Energie kann für die Durchführung eines Spülprogramms nicht genutzt werden.

Es ist deshalb ausgehend vom Vorbeschriebenen die Aufgabe der Erfindung, eine Waschmaschine vorzuschlagen, die bei guter Raumausnutzung sowie einfacher und preiswerter Herstellung gleichzeitig eine verbesserte Energieeffizienz aufweist.

Zur Lösung dieser Aufgabe wird mit der Erfindung eine Waschmaschine, insbesondere eine Textilwaschmaschine oder eine Geschirrspülmaschine, mit den Merkmalen von Anspruch 1 vorgeschlagen.

Die erfindungsgemäße Waschmaschine weist einen der Aufnahme von zu reinigendem Wasch-/Spülgut dienenden Wasch-/Spülbehälter auf. Dieser umfasst mehrere Wasch-/Spülbehälterwände, welche einen Wasch-/Spülraum umschließen. Erfindungsgemäß ist am Wasch-/Spülbehälter an zumindest einer Wasch-/Spülbehälterwand, insbesondere einer Seiten-, Decken- oder Bodenwand, außenseitig eine Isolierung angebracht. Die Isolierung soll während der Durchführung eines Wasch/Spülprogramms dafür Sorge tragen, dass dem Wasch-/Spülbehälter und dem darin enthaltenen Reinigungsgut sowie der Reinigungflotte nicht ungewollt Energie entzogen wird.

Die Waschmaschine umfasst darüber hinaus ein außerhalb des Wasch-/Spülbehälters angeordnetes, während des Betriebs der Waschmaschine zumindest zeitweise wärmeabgebendes Bauteil. Erfindungsgemäß wurde erkannt, dass es energetisch insgesamt effizienter ist, wenn zwar am Wasch-/Spülbehälter an einer Wasch-/Spülbehälterwand außenseitig eine Isolierung angebracht ist, diese Isolierung jedoch eine Ausnehmung zum Durchlass der vom Bauteil abgegebenen Wärmestrahlung aufweist. Dies gilt insbesondere bei einer Waschmaschine, bei der das wärmeabgebende Bauteil während des Betriebs des Waschmaschine an seiner Bauteilaußenseite zumindest zeitweise eine Temperatur von über 100°C aufweist. In diesem Fall zeigt sich ein erheblicher energetischer Vorteil gegenüber einer ausnehmungsfreien Isolierung der Wasch-/Spülbehälterwand. Die vom Bauteil abgegebene Wärmestrahlung und Konvektion kann somit den Wasch-/Spülbehälter erreichen und diesen erwärmen.

Das wärmeabgebende Bauteil kann beispielsweise eine etwa einem Spülflottenkreislauf oder einem Trocknungsluftkreislauf zugeordnete Heizeinrichtung oder ein Sorptionsmittelbehälter sein, aber auch ein Dampferzeuger, ein Elektromotor, eine Magnetspule, eine Pumpeinrichtung oder eine Leistungselektronikkomponente, wie etwa ein Frequenzumrichter.

Gemäß einem weiteren Merkmal der Erfindung kann es sich bei dem Bauteil auch um eine Komponente, insbesondere einen Verdichter einer Wärmepumpeneinrichtung handeln. Die vorzugsweise zur Erwärmung der Aufheizung der Reinigungsflotte dienende Wärmepumpeneinrichtung verfügt hierbei in an sich bekannter Weise über einen Verdampfer, den Verdichter, einen Verflüssiger und einen diese Komponenten miteinander strömungstechnisch verbindenden Strömungs- oder Umwälzkreislauf. Im bestimmungsgemäßen Verwendungsfall der Wärmepumpeneinrichtung wird beispielsweise der Raumluft oder einem Flüssigkeitsreservoir mittels des Verdampfers Wärmeenergie entzogen und auf das Arbeitsmedium übertragen, das infolge dessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei frei werdende Wärmeenergie dient der Aufheizung der Reinigungsflotte. Im Betrieb des Verdichters steigt dessen Oberflächentemperatur stark an. Durch die Erfindung kann die Abwärme des Verdichters, insbesondere die vom Verdichter ausgehende Wärmestrahlung und Konvektion, aufgrund der Ausnehmung in der Isolierung direkt an den Wasch-/Spülbehälter übertragen werden. Gleichzeitig kann durch die Erfindung auch in besonders einfacher Weise verhindert werden, dass die Heißgastemperatur am Austritt des Verdichters eine unzulässige Grenztemperatur übersteigt, wodurch ein sicherer und wenig fehleranfälliger Betrieb der Wärmepumpeeinrichtung sowie deren lange Lebensdauer sichergestellt werden kann. Dabei kann insbesondere auf eine separate Kühlung des Verdichters, etwa durch ein Gebläse verzichtet werden und somit insgesamt eine besonders kompakte, bauraumoptimierte Ausführung bereitgestellt werden.

Die Ausnehmung ist hinsichtlich ihrer geometrischen Abmessungen und Anordnung so bemessen, dass sie die Wirkfläche der vom wärmeabgebenden Bauteil, beispielsweise vom Verdichter einer Wärmepumpeneinrichtung, abgegebenen Wärmestrahlung abdeckt, das heißt dass die vom wärmeabgebenden Bauteil, bzw. Verdichter abgegebene Wärmestrahlung den Wasch-/Spülbehälter erreichen kann.

Die Ausnehmung, also der aufgrund der Ausnehmung isolierungsfreie Bereich der Wasch-/Spülbehälterwand, ist vorzugsweise benachbart zum beispielsweise als Verdichter ausgebildeten wärmeabgebenden Bauteil, insbesondere im Bereich der Orthogonalprojektion des wärmeabgebenden Bauteils auf die Wasch-/Spülbehälterwand, angeordnet. Somit kann ein erheblicher Teil der vom Bauteil ausgehenden Wärmestrahlung und Konvektion hindernisfrei zum Wasch-/Spülbehälter gelangen.

Aus dem gleichen Grund beträgt der Abstand zwischen der Ausnehmung und dem wärmeabgebenden Bauteil, etwa dem Verdichter, gemäß einem weiteren Merkmal weniger als 80mm, insbesondere weniger als 30mm. Vorzugsweise beträgt er zwischen 5mm und 20mm. Somit liegt eine besonders platzsparende und dennoch sichere Anordnung vor, die einen großen Wärmeeintrag in den Wasch-/Spülbehälter ermöglicht.

Vorteilhaft ist es darüber hinaus, wenn die Flächengröße der Ausnehmung dem ein- bis drei-Fachen der Fläche der Orthogonalprojektion des wärmeabgebenden Bauteils auf die Wasch-/Spülbehälterwand entspricht. Es wurde erkannt, dass eine derartige Größe den bestmöglichen Kompromiss zwischen dem auf die Ausnehmung in der Isolierung zurückzuführenden Wärmeverlust aus dem Wasch-/Spülbehälter einerseits und dem Wärmeeintrag in den Wasch-/Spülbehälter durch die Abwärme des Bauteils andererseits gewährt.

Gemäß einem weiteren Merkmal wird diejenige Strahlung des wärmeabgebenden Bauteils, die in Richtung des Wasch-/Spülbehälters abgegeben wird, vorzugsweise dadurch besser nutzbar gemacht, dass der Wasch-/Spülbehälter auf der dem Bauteil zugewandten Seite, insbesondere in einem Überdeckungsbereich mit der Ausnehmung außenseitig, mit einer wärmeabsorbierenden Beschichtung ausgerüstet ist. Die Beschichtung weist dabei vorzugsweise einen möglichst hohen Emissionsgrad, insbesondere einen Emissionsgrad von > 0,8, vorzugsweise von > 0,9 auf. Ein hoher Emissionsgrad bedeutet bekanntermaßen, dass ein Körper sowohl viel Wärme emittieren und im Umkehrschluss aber auch viel Wärmestrahlung absorbieren kann. Ein geringer Emissionsgrad hingegen emittiert weniger Wärmestrahlung bzw. reflektiert eintreffende Wärmestrahlung größerenteils, so dass nur wenig Wärmestrahlung absorbiert wird. Dabei erbringt eine solche Beschichtung den synergetischen Effekt, dass eine gezielte Aufheizung des Wasch-/Spülbehälters und damit auch der davon bevorrateten Spülflotte stattfindet und dass andererseits eine Reflektion der Wärmestrahlung am Wasch-/Spülbehälter zurück in Richtung auf das wärmeabgebende Bauteil oder auf hierzu benachbarte Baukomponenten minimiert, oder sogar nahezu unterbunden ist. Bei einer solchen Beschichtung kann es sich beispielsweise um Bitumen, insbesondere um eine Bitumenmatte handeln. Durch die Beschichtung kann eine verbesserter Energieeintrag in den Wasch-/Spülbehälter gewährleistet werden.

Die Isolierung ist gemäß einem weiteren Merkmal der Erfindung durch eine Wärmedämmmatte gebildet, insbesondere durch eine einstückige Wärmedämmmatte.

Hierzu werden an einer flächigen Wärmedämmmatte vor der Montage Schneid- und/oder Stanzprozesse vorgenommen, wodurch nach außenseitiger Anbringung der Wärmedämmmatte an die Wasch-/Spülbehälterwand die erfindungsgemäße Ausnehmung in der Isolierung bereitgestellt ist. Der erfindungsgemäße Erfolg wird dadurch in besonders einfacher, preiswerter Weise und mit lediglich geringem Montageaufwand erzielt.

Nach Anbringung an die Wasch-/Spülbehälterwand deckt die Wärmedämmmatte die Wasch-/Spülbehälterwand vorzugsweise vollständig oder nahezu vollständig ab, ausgenommen im Bereich der Ausnehmung. In einem besonders vorgezogenen Ausführungsbeispiel wird die Wärmedämmmatte außenseitig an die Bodenwand des Spülbehälters angebracht; in diesem Fall deckt die Wärmedämmmatte die Bodenwand vorzugsweise vollständig oder nahezu vollständig ab, ausgenommen im Bereich der Ausnehmung und im Bereich des Sammeltopfes. Der auf diese Weise mit der Isolierung versehene Anteil der Bodenwand beträgt vorzugsweise zwischen 1500 und 3500 cm², insbesondere 2000 bis 3000 cm², während der Bereich der Ausnehmung, d.h. der isolierungsfreie Bereich der Bodenwand, eine Größe von 250 cm² bis 750 cm², insbesondere 400 cm² bis 600 cm² beträgt. Es wurde erkannt, dass eine derartige Größe den bestmöglichen Kompromiss zwischen dem auf die Ausnehmung in der Isolierung zurückzuführenden Wärmeverlust aus dem Wasch-/Spülbehälter einerseits und dem Wärmeeintrag in den Wasch-/Spülbehälter durch die Abwärme des Bauteils andererseits gewährt.

Die Wärmedämmmatte weist eine Dicke von 2 bis 30 mm, vorzugsweise von 10 bis 20 mm auf. Ihre Wärmeleitfähigkeit λ liegt zwischen 0,01 und 0,1 W/(m*K), vorzugsweise unterhalb von 0,05 W/(m*K), insbesondere zwischen 0,03 und 0,04 W/(m*K).Die Wärmedämmmatte kann beispielsweise ein PP-Vlies, PE-Vlies, Polyestervlies, Zellkautschuk oder Baumwollvlies umfassen oder daraus gebildet sein. Vorzugsweise ist sie wasserabweisend und weitgehend formstabil ausgebildet.

Gemäß einem weiteren Merkmal der Erfindung weist die Wärmedämmmatte einen Anlageflächenbereich auf, mit dem sie an der Wasch-/Spülbehälterwand anliegt, und mindestens einen Abklappbereich, welcher sich entlang einer von der Wasch-/Spülbehälterwand fortweisenden Richtung erstreckt. Mit dem Anlageflächenbereich liegt die Wärmedämmmatte zur Isolierung des Wasch-/Spülbehälters unmittelbar an der, optional etwa mit Bitumen beschichteten Wasch-/Spülbehälterwand an. Angrenzend an einer Abklappkante des Anlageflächenbreichs schließt sich der mindestens eine Abklappbereich an. Dieser erstreckt sich ausgehend von einer Kante des Anlageflächenbereichs entlang einer von der Wasch-/Spülbehälterwand fortweisenden Richtung. Die Kante des Anlageflächenbereichs erstreckt sich dabei entlang eines Randes der Ausnehmung. Somit wird auf besonders einfache Weise eine Konstruktion bereitgestellt, bei der die Wärmedämmmatte über die Isolierung der Wasch-/Spülbehälterwand hinaus zusätzliche Funktionen erfüllen kann. Dabei wird insbesondere ein Montageschritt für eine zusätzliche Wärmedämmmatte eingespart und das Material zur Herstellung der Wärmedämmmatte besonders effizient ausgenutzt.

Der Abklappbereich der Wärmedämmmatte ist vorzugsweise seitlich des wärmeabgebenden Bauteils, beispielsweise seitlich des Verdichters der Wärmepumpe, angeordnet; er erstreckt sich somit entlang einer Seite des wärmeabgebenden Bauteils. Somit kann mit ein und derselben Wärmedämmmatte mittels des Anlageflächenbereichs einerseits die Isolierung der Wasch-/Spülbehälterwand bereitgestellt und somit Wärmeverluste aus dem Wasch-/Spülbehälter vermieden und dabei gleichzeitig einen Wärmeübertrag vom Bauteil auf den Wasch-/Spülbehälter zugelassen werden, mittels des Abklappbereichs können andererseits aber auch weitere, außerhalb des Wasch-/Spülbehälters angeordnete, insbesondere thermisch sensible Komponenten der Waschmaschine vor einem hohen Wärmeeintrag durch das wärmeabgebenden Bauteil geschützt werden. Hierdurch wird eine wenig Bauraum verbrauchende Konstruktion geschaffen, die überdies die Montageschritte verringert. Vorzugsweise sind an mehreren, vorzugsweise zumindest drei Seiten, etwa drei orthogonalen Seiten, des wärmeabgebenden Bauteils, etwa des Verdichters, jeweils Abklappbereiche der Wärmedämmmatte angeordnet. Somit kann ein noch besserer thermischer Schutz anderer Bauteile der Waschmaschine ermöglicht und eine noch bessere Wärmeübertragung auf den Wasch-/Spülbehälter erzielt sowie Herstellung und Monatage weiter verbessert werden.

Es ist auch möglich, dass sich ein Abklappbereich der Wärmedämmmatte entlang mehrerer, insbesondere zueinander orthogonaler Seiten um das wärmeabgebende Bauteil herum erstreckt. Anders ausgedrückt kann ein Abklappbereich der Wärmedämmmatte das wärmeabgebende Bauteil teilweise umschließen. Es können auch mehrere Abklappbereiche vorhanden sein, welche gemeinsam das wärmeabgebende Bauteil teilweise umschließen. Auch kann die Wärmedämmmatte anschließend an einen Abklappbereich, welcher sich entlang einer von der Wasch-/Spülbehälterwand fortweisenden Richtung erstreckt und seitlich des wärmeabgebenden Bauteils angeordnet ist, einen Fortsetzungsbereich aufweisen, welcher sich unterhalb des wärmeabgebenden Bauteils erstreckt. All diese Maßnahmen erhöhen den thermischen Schutz anderer Bauteile der Waschmaschine und verbessern die Übertragung der Abwärme des Bauteils auf den Wasch-/Spülbehälter.

Gemäß einem weiteren Merkmal der Erfindung weist die Waschmaschine einen mit dem wärmeabgebenden Bauteil, etwa dem Verdichter, zusammenwirkenden Strahlungsschirm auf. Dieser dient dazu, die Umgebung des Bauteils gegenüber dem Bauteil zumindest teilweise abzuschirmen. Im Ergebnis dieser Abschirmung steht, dass nur eine verminderte Strahlungsmenge zur Erwärmung der Verdichterumgebung verloren geht, das heißt die Wärmestrahlungsverluste minimiert sind. Der Strahlungsschirm ist insbesondere reflektierend ausgebildet und so angeordnet, dass vom wärmeabgebenden Bauteil ausgesandte Wärmestrahlung in Richtung auf das wärmeabgebende Bauteil und/oder die Ausnehmung umgelenkt wird.

Das Bauteil, also etwa der Verdichter, bei dem es sich insbesondere um einen horizontal ausgerichteten Rollkolbenverdichter handeln kann, wird zumindest partiell mittels des Strahlungsschirms zu seiner Umgebung abgeschirmt. Die verbleibende wärmeabstrahlende Seite des Verdichters ist bevorzugterweise einer wärmeabsorbierenden Fläche des Wasch-/Spülbehälters mit hohem Emissionsgrad von vorzugsweise > 0,9 zugewandt. Die vom Bauteil abgegebene Wärmestrahlung kann damit gezielt einem Spülprozess zugeführt werden, denn der durch die vom Bauteil abgegebene Wärmestrahlung erwärmte Wasch-/Spülbehälter erwärmt wiederum die im Innenraum des Wasch-/Spülbehälter vorhandene, beispielsweise umgewälzte Spül- bzw. Waschflotte.

Der erfindungsgemäß vorgesehene Strahlungsschirm sorgt mithin dafür, dass die unnötige Erwärmung von zum wärmeabgebenden Bauteil benachbarten Baukomponenten unterbleibt. Denn diese werden durch den Strahlungsschirm abgeschirmt, der damit als Barriere für die vom Bauteil abgegebene Wärmestrahlung dient. Desweiteren sorgt der Strahlungsschirm dafür, dass die Wärmestrahlung stattdessen in erhöhtem Maße dem Wasch-/Spülbehälter zugeführt werden.

Gemäß einer ersten Alternative der Erfindung ist der Strahlungsschirm eine Beschichtung, die außenseitig auf das Gehäuse des Bauteils aufgebracht ist. Diese Beschichtung ist insbesondere als nach außen reflektionsarme Beschichtung ausgebildet und verhindert so einen Strahlungsabgang in Richtung der im Wirkschatten der Beschichtung liegenden Baukomponenten. Insbesondere wenn es sich bei dem wärmeabgebenden Bauteil um den Verdichter einer Wärmepumpeneinrichtung handelt, sollte die Beschichtung das Gehäuse des Verdichters nicht vollflächig abdecken, da es im Betrieb der Wärmepumpeneinrichtung ansonsten zu einer Überhitzung des Verdichters kommen könnte. Die Beschichtung ist in Ihrer Flächenabdeckung des Gehäuses mithin so zu wählen, dass die Betriebsgrenzen des Verdichters nicht überschritten sind.

Gemäß einer zweiten Alternative der Erfindung ist vorgesehen, dass der Strahlungsschirm ein zum wärmeabgebenden Bauteil, insbesondere zum Verdichter beabstandet angeordneter Reflektor ist.

Dabei schirmt der Reflektor wünschenswerterweise nicht aufzuheizende Baukomponenten der Waschmaschine nicht nur ab, er sorgt durch seine Anordnung und Ausbildung auch dafür, dass in Richtung des Reflektors abgegebene Wärmestrahlung am Reflektor reflektiert und zurück in Richtung des wärmeabgebenden Bauteils und/oder in Richtung des Wasch-/Spülbehälters, insbesondere in Richtung der Ausnehmung der an der Wasch-/Spülbehälterwand des Wasch-/Spülbehälters angebrachten Isolierung, umgelenkt wird. Dabei ist für die Wirksamkeit des Reflektors von entscheidender Bedeutung, dass der Emissionsgrad möglichst klein ist, vorzugsweise unter 0,2, insbesondere unter 0,1 liegt. Es wird deshalb in diesem Zusammenhang vorgeschlagen, den Reflektor aus Metall, vorzugsweise aus Edelstahl oder Aluminium zu bilden, wobei die verdichterseitige Reflektorfläche vorzugsweise poliert ist. Eine polierte Edelstahlfläche hat einen Emissionsgrad von ca. 0,05. Eine preisgünstige Alternative ist ein aus einem Aluminiumblech gebildeter Reflektor, der poliert einen Emissionsgrad von < 0,1 aufweist.

Alternativ kann der Reflektor aus Kunststoff gebildet sein, wobei in diesem Fall bevorzugterweise auf der dem wärmeabgebenden Bauteil zugewandten Seite eine Verspiegelung des Reflektors vorgesehen ist. Die Verspiegelung kann durch Metallbedampfung oder durch Lackieren ausgebildet sein.

Der Reflektor kann gemäß einem weiteren Merkmal der Erfindung das wärmeabgebende Bauteil, insbesondere das Gehäuse des Verdichters zumindest teilweise konzentrisch umgeben oder er ist parabolisch, das heißt nach Art eines Parabolspiegels ausgebildet. Alternativ kann der Reflektor als Abschnitt der Bodenwanne der Waschmaschine ausgebildet sein. Gemäß dieser Alternative wird auf ein zusätzliches Bauteil verzichtet und die Bodenwanne als Reflektor genutzt, wobei es bevorzugt ist, den als Reflektor dienenden Abschnitt der Bodenwanne in schon vorbeschriebener Weise mit einer Reflektionsfläche auszubilden, die einen möglichst kleinen Emissionsgrad aufweist.

In Ergänzung oder alternativ kann ein oder der Strahlungsschirm auch durch die zur Isolierung der Wasch-/Spülbehälterwand dienende Wärmedämmmatte, insbesondere durch einen wie oben beschrieben seitlich des wärmeabgebenden Bauteils, beispielsweise seitlich des Verdichters der Wärmepumpe, angeordneten Abklappbereich der Wärmedämmmatte oder durch mehrere solche Abklappbereiche der Wärmedämmmatte bereitgestellt sein. Die Wärmedämmmatte oder ein Abklappbereich der Wärmedämmmatte kann hierbei auf der dem wärmeabgebenden Bauteil zugewandten Seite eine Beschichtung mit niedrigem Emissionsgrad aufweisen, vorzugsweise von unter 0,2, insbesondere unter 0,1. Dabei kann es sich etwa um eine Aluminiumfolie handeln. Insbesondere kann Wärmedämmmatte oder der Abklappbereich so ausgebildet und angeordnet sein, dass vom wärmeabgebenden Bauteil ausgesandte Wärmestrahlung in Richtung der Ausnehmung umgelenkt wird.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Geschirrspülmaschine ;
- Fig. 2: in schematischer Draufsicht von oben eine Spülbehälterisolierung mit einem wärmeabgebenden Bauteil;
- Fig. 3: in schematischer Frontansicht einen Verdichter;
- Fig. 4: in einer schematischen Seitenansicht den Verdichter nach Fig. 3;
- Fig. 5: in schematischer Draufsicht von oben eine Spülbehälterisolierung mit einem wärmeabgebenden Bauteil
- Fig. 6: in schematischer Seitenansicht eine Spülbehälterisolierung mit einem wärmeabgebenden Bauteil;
- Fig. 7: in schematischer Darstellung eine erfindungsgemäße Geschirrspülmaschine gemäß einer zweiten Ausführungsform;
- Fig. 8: in schematischer Draufsicht von oben eine Spülbehälterisolierung mit einem wärmeabgebenden Bauteil;
- Fig. 9: in schematischer Seitenansicht eine Spülbehälterisolierung mit einem wärmeabgebenden Bauteil;
- Fig. 10: in schematischer Darstellung eine erfindungsgemäße Geschirrspülmaschine gemäß einer dritten Ausführungsform;
- Fig. 11: in schematischer Frontansicht ein Verdichter mit einem Strahlungsschirm gemäß einer ersten Ausführungsform;
- Fig. 12: in schematischer Frontansicht ein Verdichter mit einem Strahlungsschirm gemäß einer zweiten Ausführungsform;
- Fig. 13: in schematischer Frontansicht ein Verdichter mit einem Strahlungsschirm gemäß einer dritten Ausführungsform;
- Fig. 14: in einer schematischen Frontansicht einen Verdichter gemäß einer weiteren Ausführungsform.

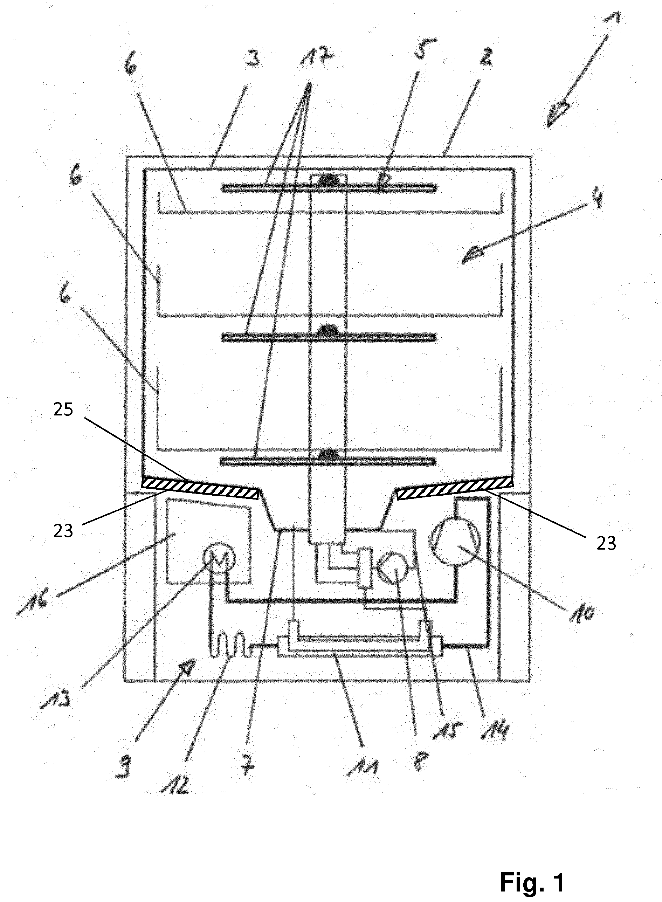

Fig. 1 lässt in rein schematischer Darstellung eine Waschmaschine, hier ohne Beschränkung der Allgemeinheit in Gestalt einer Geschirrspülmaschine 1, insbesondere einer Haushaltsspülmaschine, nach der Erfindung erkennen.

Die Geschirrspülmaschine 1 verfügt über ein Gehäuse 2, das unter anderem einen Wasch-/Spülbehälter 3 aufnimmt, im Folgenden als Spülbehälter bezeichnet. Der Spülbehälter 3 stellt seinerseits einen Wasch-/Spülraum 4, im Folgenden als Spülraum bezeichnet, bereit, der im bestimmungsgemäßen Verwendungsfall der Aufnahme von zu reinigendem Wasch-/Spülgut dient.

Zur Beschickung von zu reinigendem Spülgut mit Spülflotte dient eine Sprüheinrichtung 5, die innerhalb des Spülbehälters 3 angeordnet ist. Bevorzugterweise verfügt eine solche Sprüheinrichtung über Sprüharme 17, die jeweils verdrehbar innerhalb des Spülbehälters 3 angeordnet sind.

Im gezeigten Ausführungsbeispiel dienen zur Aufnahme des zu reinigenden Spülguts Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an dem eine Umwälzpumpe 8 strömungstechnisch angeschlossen ist. Über entsprechende Versorgungsleitungen ist die Sprüheinrichtung 5 an die Umwälzpumpe 8 strömungstechnisch angeschlossen. Im bestimmungsgemäßen Verwendungsfall kann damit eine Beschickung der Sprüheinrichtung 5 mit Spülflotte mittels der Umwälzpumpe 8 stattfinden.

Die Geschirrspülmaschine 1 verfügt in diesem Ausführungsbeispiel der Erfindung desweiteren ohne Beschränkung der Allgemeinheit über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium geführt ist. Der Verdampfer 13 ist innerhalb eines Tanks 16 angeordnet, der mit Wasser als Wärmeträgermedium befüllt ist.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 geführten Arbeitsmedium auf die Spülflotte statt. Zu diesem Zweck ist ein an die Umwälzpumpe angeschlossener Umwälzkreislauf 15 vorgesehen, der der Spülflottenumwälzung dient. Die im Betriebsfall im Verflüssiger 11 durch Verflüssigung des Arbeitsmediums freiwerdende Wärmeenergie wird mithin auf die im Umwälzkreislauf 15 umgewälzte Spülflotte vorgetragen, zu welchem Zweck ein entsprechend ausgebildeter Wärmetauscher vorgesehen ist.

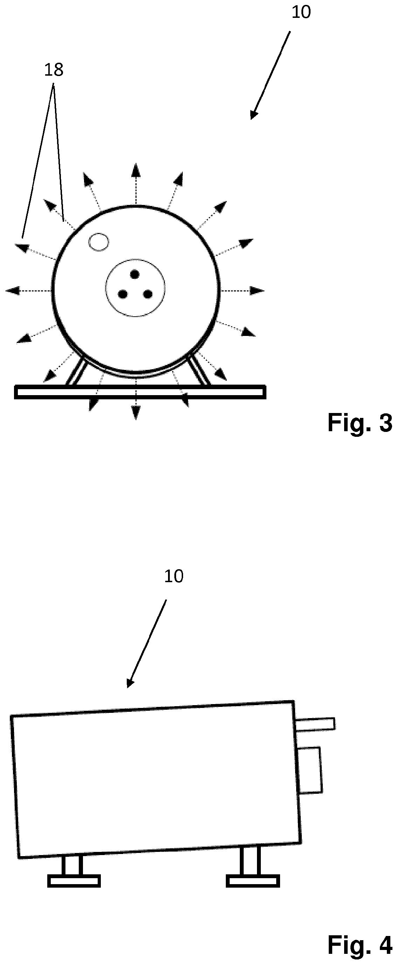

Bei dem hier als wärmeabgebendes Bauteil im erfindungsgemäßen Sinne vorhandenen Verdichter 10 handelt es sich bevorzugterweise um einen Rollenkolbenverdichter, wie er schematisch in Fign. 3 und 4 dargestellt ist, möglich ist jedoch auch die Verwendung etwa eines Hubkolben- eines Schrauben-, eines, Drehkolben- oder eines Scrollverdichters. Im bestimmungsgemäßen Betriebsfall gibt der Verdichter 10 Abwärme in Form von Wärmestrahlung 18 ab, wie dies die Darstellung nach Fig. 3 erkennen lässt. Diese vom Verdichter 10 abgegebene Wärmestrahlung 18 geht dem Spülprozess ohne die Erfindung als Abwärme verloren.

Wie aus Fig. 1 schematisch angedeutet, sind in diesem Ausführungsbeispiel der Erfindung wesentliche Komponenten der Wärmepumpeneinrichtung, insbesondere der Verdichter 10, unterhalb des Spülbehälters 3, insbesondere in einem Sockelbereich der Waschmaschine angeordnet. Aus Fig. 1 ist darüber hinaus zu erkennen, dass der Spülbehälter 3 zumindest unterseitig mit einer Isolierung 23 abgedeckt ist. Weitere Wasch-/Spülbehälterwande können ebenfalls mit einer Isolierung versehen sein, was hier zur besseren Übersichtlichkeit jedoch nicht gezeigt ist. Die unterseitig des Spülbehälters 3, nämlich am Spülbehälterboden angebrachte Isolierung 23 ist vorzugsweise wasserabweisend ausgebildet. Gemäß einem weiteren Merkmal kann sie weitgehend formstabil sein. Ihr Material kann insbesondere PP-Vlies, PE, Polyestervlies, Zellkautschuk oder Baumwollvlies sein oder umfassen. Die Isolierung 23 trägt dafür Sorge, dass der Spülbehälter 3 nicht unnötig Wärme an die Umgebung abgibt.

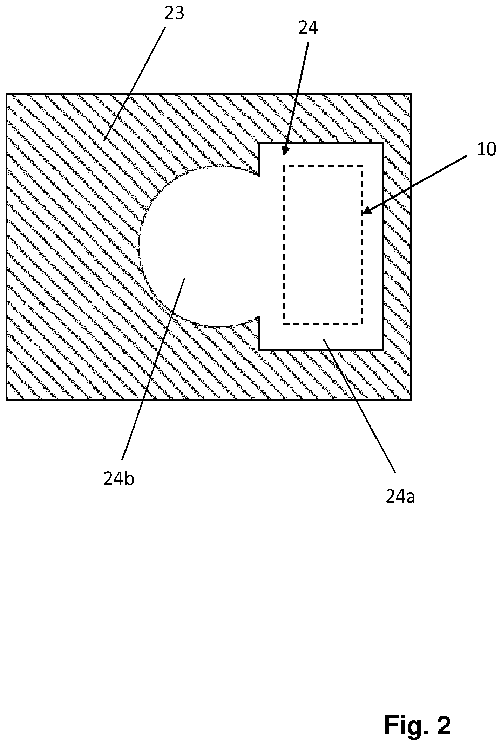

Um zu ermöglichen, dass vom Verdichter 10 ausgehende Wärmestrahlung vom Spülbehälter 3 absorbiert werden kann, ist die Isolierung 23 erfindungsgemäß in Entsprechung der Ausgestaltung des Verdichters 10, nämlich zumindest im Bereich der Orthogonalprojektion des Verdichters 10 auf die Wasch-/Spülbehälterwand, hier den Spülbehälterboden 25, mit einer Ausnehmung 24 ausgerüstet, wie sich dies aus der Darstellung nach Fig. 2 ergibt. Die Isolierung 23 ist dabei vorzugsweise als einstückige Wärmedämmmatte ausgebildet. Deren äußere Abmessung, die im Wesentlichen Rechteckform hat, ist dabei an die Größe und Geometrie des Spülbehälterbodens 25 angepasst, um eine möglichst vollständige Isolierung nach unten hin zu bewirken. Bei der Herstellung wird die zunächst rechteckige Wärmedämmmatte vor ihrer Anbringung an die Unterseite des Spülbehälters etwa durch Stanzen oder Schneiden mit der, in diesem Ausführungsbeispiel innenliegenden Ausnehmung 24 versehen. Die Ausnehmung 24 kann wie hier gezeigt neben einem ersten Bereich 24a, optional einen zweiten Bereich 24b aufweisen. Dabei ermöglicht der zweite Bereich 24b das Durchragen eines am Spülbehälterboden 25 angeordneten bzw. mit dem Spülbehälterboden 25 verbundenen Funktionsbauteils, im vorligenden Fall des Sammeltopfs 7, durch die Wärmedämmplatte 23 hindurch. In jedem Fall weist die Ausnehmung 24 den (ersten) Bereich 24a auf, welcher das Durchlassen des im montierten Zustand unterhalb der Wärmedämmmatte 23 angeordneten Verdichters 10, dessen laterale Ausrichtung in Fig. 2 gestichelt angedeutet ist, abgegebenen Wärmestrahlung ermöglicht. Eine derartige Ausnehmung kann stattdessen oder zusätzlich auch für ein anderes wärmeabgebendes Bauteil vorgesehen sein. Die beiden Bereiche 24a und 24b der Ausnehmung 24 können wie hier gezeigt ineinander übergehen, stattdessen können sie aber auch separat ausgebildet sein.

In einem Überdeckungsbereich mit der Ausnehmung 24, insbesondere mit dem ersten Bereich 24a, kann der Spülbehälter 3 verdichterseitig bevorzugterweise mit einer hier nicht gezeigten Beschichtung beispielsweise aus Bitumen ausgerüstet sein, das heißt mit einer Beschichtung, die einen hohen Emissionsgrad, insbesondere von > 0,9 aufweist. Damit ist eine effektive Aufnahme der vom Verdichter 10 ausgehenden Wärmestrahlung durch den Spülbehälter 3 gewährleistet.

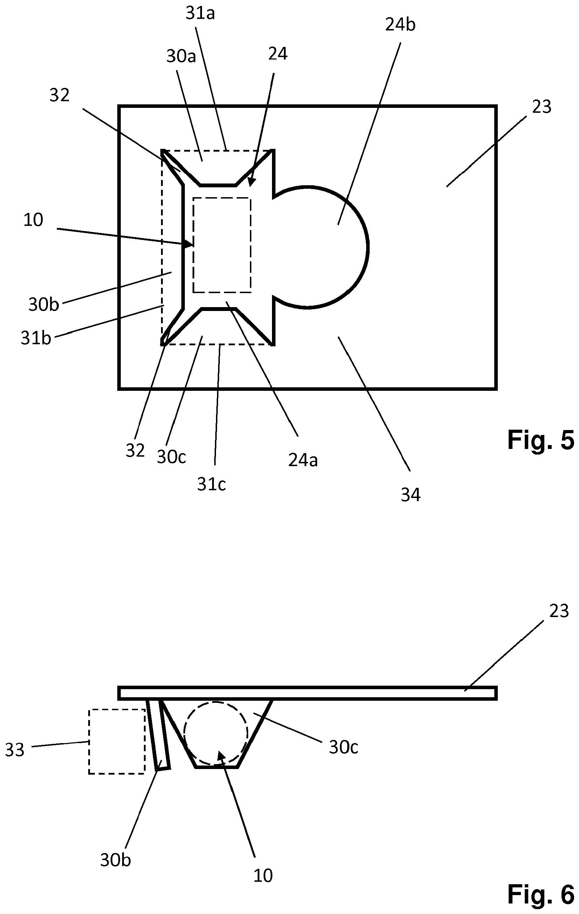

Die Darstellungen nach Fig. 5 und 6 zeigen schematisch eine Isolierung 23, insbesondere eine Wärmedämmmatte für eine Waschmaschine gemäß einem weiteren Ausführungsbeispiel. Die Wärmedämmmatte 23 entspricht weitgehend der in Fig. 2 beschriebenen Wärmedämmmatte, insofern treffen die vorgenannten Ausführungen hier genauso zu. Auch hier ist die laterale Ausrichtung eines im montierten Zustand unterhalb der Wärmedämmmatte 23 angeordneten Verdichters 10 gestrichelt angedeutet. Die Wärmedämmmatte unterscheidet sich lediglich in der Gestaltung der Ausnehmung 24, insbesondere des ersten Bereichs 24a von der in Fig. 2 gezeigten Wärmedämmmatte. Dabei weist sie ein oder mehrere zusätzliche Einschnitte 32 auf, mittels welcher ein oder mehrere Abklappbereiche 30a, 30b, 30c der Wärmedämmmatte 23 an jeweiligen Abklappkanten 31a, 31b, 31c abgeklappt werden können. Im montierten Zustand liegt die Wärmedämmmatte 23 größtenteils, nämlich mit seinem Anlageflächenbereich 34, am Spüraumboden 25 an, nicht jedoch mit dem einen oder mehreren Abklappbereichen 30a, 30b, 30c, welche sich entlang einer vom Spülraumboden 25 fortweisenden Richtung erstrecken, wie in Fig. 6 gezeigt. Ein Abklappbereich 30c erstreckt sich dabei entlang einer Frontseite des Verdichters 10, ein Abklappbereich 30b erstreckt sich enlang einer Längsseite des Verdichters 10. Durch den Abklappbereich 30b wird eine hier gestrichelt angedeutete benachbarte Komponente 33 der Waschmaschine vor einer durch die Abwärme des Verdichters 10 bewirkten Überhitzung geschützt.

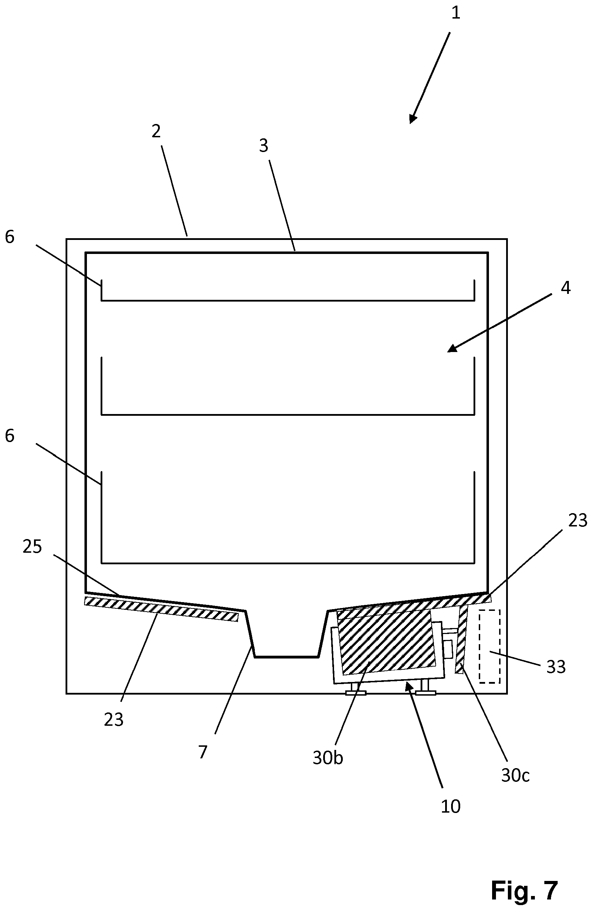

Fig. 7 zeigt ein Ausführungsbeispiel einer erfindungsgemäßen Waschmaschine 1 mit einer Wärmedammmatte 23 ähnlich der in den. Fign. 5 und 6 gezeigten. Zu erkennen sind ein im Sockelbereich der Waschmaschine 1 unterhalb des Spülraumboden 25 angeordneter Verdichter 10 sowie insbesondere Abklappbereiche 30b und 30c der Wärmedammmatte 23, welche sich entlang einer vom Spülraumboden 25 fortweisenden Richtung erstrecken, wobei Abklappbereich 30c sich entlang einer Frontseite und Abklappbereich 30b etnlang einer Längsseite des Verdichters 10 erstreckt. Insbesondere durch Abklappbereich 30c wird ein Wärmeschutz für die benachbarte Komponente 33 bereitgestellt.

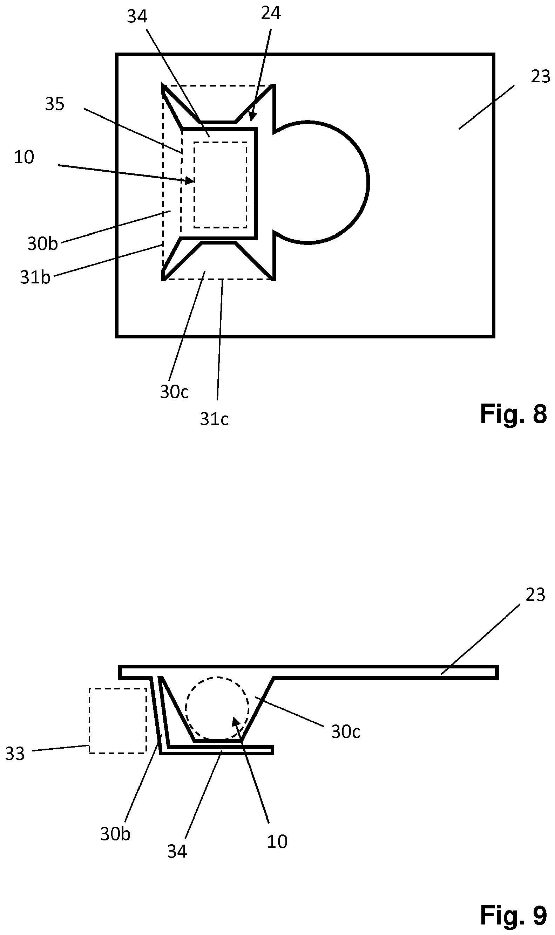

Die Darstellungen nach Fig. 8 und 9 zeigen schematisch eine Isolierung 23, insbesondere eine Wärmedämmmatte für eine Waschmaschine gemäß einem weiteren Ausführungsbeispiel. Die Wärmedämmmatte 23 entspricht weitgehend der in Fig. 5, 6 und 7 beschriebenen Wärmedämmmatte, insofern treffen die vorgenannten Ausführungen hier genauso zu. Die Wärmedämmmatte unterscheidet sich dadurch von der in Fig. 5-7 gezeigten Wärmedämmmatte, dass der Abklappbereich 30b gegenüber dem vorigen Ausführungsbeispiel eine Verlängerung aufweist. Anders ausgedrückt weist die Wärmedämmmatte 23 anschließend an den Abklappbereich 30b einen Fortsetzungsbereich 34 auf. Diese kann an einer Abklappkante 35 vom Abklappbereich 30b abgeklappt werden. Im montierten Zustand erstreckt sich der Fortsetzungsbereich 34 unterhalb des Verdichters 10.

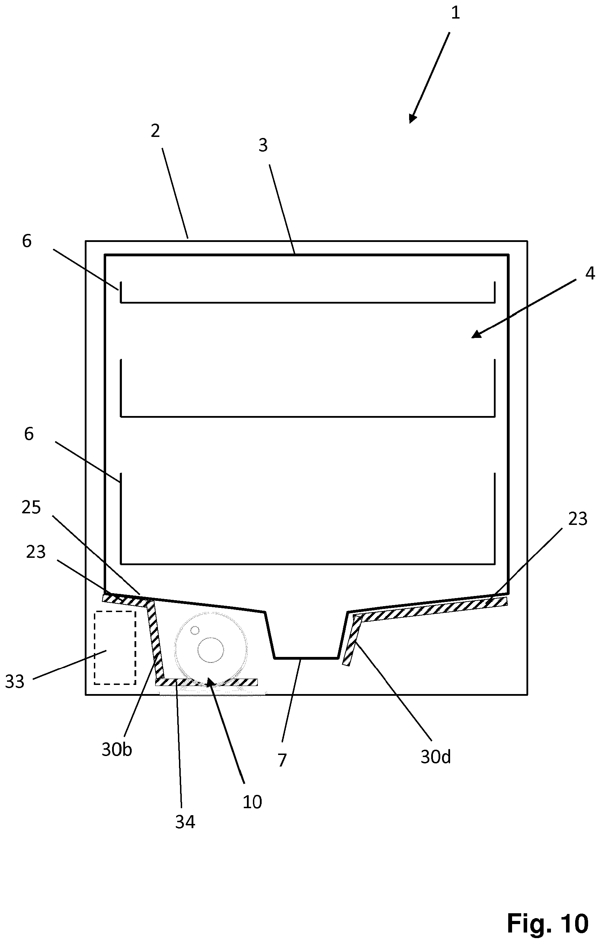

Fig. 10 zeigt ein Ausführungsbeispiel einer erfindungsgemäßen Waschmaschine 1 mit einer Wärmedammmatte 23 ähnlich der in den. Fign. 8 und 9 gezeigten. Zu erkennen sind wiederum ein im Sockelbereich der Waschmaschine 1 unterhalb des Spülraumboden 25 angeordneter Verdichter 10 sowie insbesondere Abklappbereich 30b und Fortsetzungsbereich 34 der Wärmedammmatte 23, wobei Abklappbereich 30b sich entlang einer Längsseite des Verdichters 10 und der sich an den Abklappbereich 30b anschließende Fortsetzungsbereich 34 sich unterhalb des Verdichters 10 erstreckt. Darüber hinaus weist die Wärmedämmmatte 23 einen Abklappbereich 30d auf, welcher sich im montierten Zustand an den Sammeltopf anlegt bzw. für der er in einem Teilbereich eine Isolierung ausbildet. Insbesondere durch Abklappbereich 30b wird ein Wärmeschutz für die benachbarte Komponente 33 bereitgestellt.

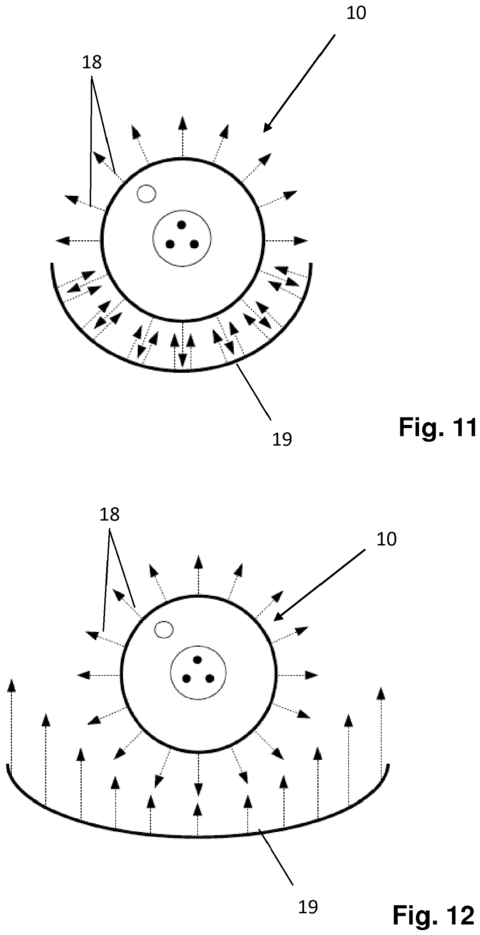

Gemäß weiteren in den Fign. 11 - 14 gezeigten Ausführungsbeispielen ist ein Strahlungsschirm vorgesehen, der mit dem Verdichter 10 zusammenwirkt. Dabei schirmt der Strahlungsschirm die Umgebung des Verdichters 10 gegenüber dem Verdichter 10 zumindest teilweise ab.

Ein solcher Strahlungsschirm kann beispielsweise durch einen Reflektor 19 gebildet sein, wie er in unterschiedlichen Ausführungsformen in den Fign. 11, 12 und 13 dargestellt ist. Der Reflektor 19 ist derart angeordnet und ausgebildet ist, um vom Verdichter 10 ausgesandte Wärmestrahlung 18 in Richtung auf den Verdichter 10 und/oder die, hier nicht gezeigte, jedoch oberhalb des Verdichters angeordnete Ausnehmung 24 umzulenken.

Gemäß der Ausführungsform nach Fig. 11 umgibt der Reflektor 19 das Gehäuse des Verdichters 10 zumindest teilweise konzentrisch. Dabei ist der Reflektor im Abstand von ca. 1 mm bis 50 mm, besonders bevorzugt von ca. 10 mm bis 15 mm zum Verdichter 10 angeordnet. Eine alternative Ausgestaltung zeigt Fig. 12, wonach der Reflektor 19 nach Art eines Parabolspiegels parabolisch ausgebildet ist.

Der Reflektor besitzt bevorzugterweise verdichterseitig eine verspiegelte Fläche. Zu diesem Zweck kann beispielsweise vorgesehen sein, den Reflektor 19 aus einem Kunststoffmaterial zu bilden, welches verdichterseitig verspiegelt ausgebildet ist, beispielsweise durch Lackieren oder durch Bedampfen. Alternativ besteht der Reflektor 19 aus einem Metall wie zum Beispiel Edelstahl oder Aluminium, wobei die verdichterseitige Oberfläche des Reflektors 19 poliert ist.

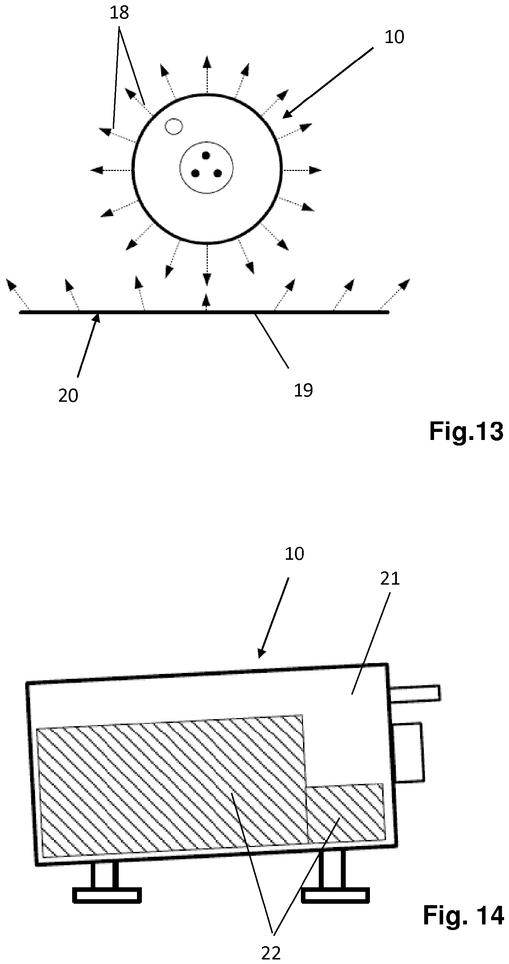

Fig. 13 zeigt eine Ausführungsform, dergemäß der Reflektor 19 als Abschnitt der Bodenwanne 20 der Geschirrspülmaschine 1 ausgebildet ist. Auf die separate Ausgestaltung eines Reflektors 19 ist gemäß diesem Ausführungsbeispiel verzichtet, indem ein Abschnitt der Bodenwanne 20 so ausgebildet ist, dass er als Reflektor 19 dient.

Eine weitere Ausführungsform zeigen die Fig 14. Gemäß dieser Ausführungsform ist der Strahlungsschirm als Beschichtung 22 ausgebildet, die außenseitig auf das Gehäuse 21 des Verdichters 10 aufgebracht ist.

Ein Reflektor, den den Strahlungsschirm bildet, kann gemäß einem weiteren Ausführungsbeispiel stattdessen oder zusätzlich auch durch die Wärmedämmmatte 23, insbesondere durch ein Abklappbereich 30a, 30b, 30c, 30d bereitgestellt werden. Hierzu kann bei dem Ausführungsbeispiel gemäß Fig 5, 6 oder 7 bzw. bei dem Ausführungsbeispiel gemäß Fig. 8, 9 oder 10 ein Abklappbereich 30a, 30b, 30c, 30d oder ein Fortzsetzungbereich 34 auf der dem Verdichter 10 zugewandten Seite eine Wärmestrahlung reflektierende Beschichtung aufweisen, insbesondere eine Beschichtung mit niedrigem Emissionskoeffizienten von < 0,2, etwa eine Aluminiumfolie.

### Bezugszeichen

- 1: Waschmaschine
- 2: Gehäuse
- 3: Wasch-/Spülbehälter
- 4: Wasch-/Spülraum
- 5: Sprüheinrichtung
- 6: Spülkorb
- 7: Sammeltopf
- 8: Umwälzpumpe
- 9: Wärmepumpeneinrichtung
- 10: Verdichter
- 11: Verflüssiger
- 12: Drossel
- 13: Verdampfer
- 14: Strömungskreislauf
- 15: Umwälzkreislauf
- 16: Tank
- 17: Sprüharm
- 18: Wärmestrahlung
- 19: Reflektor
- 20: Bodenwanne
- 21: Gehäuse des Verdichters
- 22: Beschichtung
- 23: Isolierung
- 24: Ausnehmung
- 24a: erster Bereich
- 24b: zweiter Bereich
- 25: Spülbehälterboden
- 30a: Abklappbereich
- 30b: Abklappbereich
- 30c: Abklappbereich
- 30d: Abklappbereich
- 31a: Abklappkante
- 31b: Abklappkante
- 31c: Abklappkante
- 32: Einschnitt
- 33: Nachbarbauteil
- 34: Fortsetzungsbereich
- 35: Abklappkante

## Patentansprüche

1. Waschmaschine, insbesondere Haushaltsgeschirrspülmaschine, mit einem einen Wasch-/Spülraum (4) bereitstellenden, der Aufnahme von zu reinigendem Wasch-/Spülgut dienenden Wasch-/Spülbehälter (3), an den an zumindest einer Wasch-/Spülbehälterwand, insbesondere Seiten-, Decken- oder Bodenwand (25), außenseitig eine Isolierung (23) angebracht ist, und mit einem außerhalb des Wasch-/Spülbehälters (3) angeordneten, während des Betriebs der Waschmaschine zumindest zeitweise wärmeabgebenden Bauteil (10),
**dadurch gekennzeichnet,**
**dass** die Isolierung (23) benachbart zum wärmeabgebenden Bauteil (10) eine Ausnehmung (24) zum Durchlass der vom Bauteil (10) abgegebenen Wärmestrahlung aufweist.

2. Waschmaschine nach Anspruch 1,
**dadurch gekennzeichnet,**
**dass** das wärmeabgebende Bauteil (10) während des Betriebs der Waschmaschine außenseitig zeitweise eine Temperatur von über 100°C aufweist.

3. Waschmaschine nach einem der vorhergehenden Ansprüche,
**dadurch gekennzeichnet,**
**dass** das wärmeabgebende Bauteil (10) ein Verdichter einer Wärmepumpeneinrichtung (9) ist.

4. Waschmaschine nach einem der vorhergehenden Ansprüche,
**dadurch gekennzeichnet,**
**dass** die Ausnehmung (24) im Bereich der Orthogonalprojektion des Bauteils (10) auf die Wasch-/Spülbehälterwand angeordnet ist.

5. Waschmaschine nach einem der vorhergehenden Ansprüche,
**dadurch gekennzeichnet,**
**dass** der Abstand zwischen Ausnehmung (24) und Bauteil (10) weniger als 80mm, insbesondere weniger als 30mm, vorzugsweise zwischen 5mm und 20mm beträgt.

6. Waschmaschine nach einem der vorhergehenden Ansprüche,
**dadurch gekennzeichnet,**
**dass** die Flächengröße der Ausnehmung (24) dem Ein- bis Dreifachen der Fläche der Orthogonalprojektion des Bauteils (10) auf die Wasch-/Spülbehälterwand entspricht, vorzugsweise dass die Flächengröße der Ausnehmung (24) im wesentlichen der Fläche der Orthogonalprojektion des Bauteils (10) auf die Wasch-/Spülbehälterwand entspricht.

7. Waschmaschine nach einem der vorhergehenden Ansprüche,
**dadurch gekennzeichnet,**
**dass** der Wasch-/Spülbehälter (3) in einem Überdeckungsbereich mit der Ausnehmung (24) eine außenseitig auf den Wasch-/Spülbehälter (3) aufgebrachte Beschichtung mit hohem Emissionsgrad, insbesondere einem Emissionsgrad von mindestens 0,9, vorzugsweise mindestens 0,95 trägt.

8. Waschmaschine nach einem der vorhergehenden Ansprüche,
**dadurch gekennzeichnet,**
**dass** die Isolierung (23) durch eine, insbesondere einstückige Wärmedämmmatte gebildet ist.

9. Waschmaschine nach dem vorhergehenden Anspruch,
**dadurch gekennzeichnet,**
**dass** die Wärmedämmmatte (23) die Bodenwand (25) des Wasch-/Spülbehälters (3) vollständig abdeckt, ausgenommen im Bereich der Ausnehmung (24) und im Bereich des Sammeltopfes (7).

10. Waschmaschine nach einem der vorhergehenden Ansprüche,
**dadurch gekennzeichnet,**
**dass** die Wärmedämmmatte (23) einen Anlageflächenbereich aufweist, mit dem sie an der Wasch-/Spülbehälterwand anliegt, und mindestens einen Abklappbereich, welcher sich entlang einer von der Wasch-/Spülbehälterwand fortweisenden Richtung erstreckt.

11. Waschmaschine nach einem der vorhergehenden Ansprüche,
**dadurch gekennzeichnet,**
**dass** der Abklappbereich seitlich des wärmeabgebenden Bauteils (10) angeordnet ist, insbesondere dass an mehreren, vorzugsweise zumindest drei Seiten des wärmeabgebenden Bauteils (10) Abklappbereiche der Wärmedämmmatte (23) angeordnet sind.

12. Waschmaschine nach einem der vorhergehenden Ansprüche,
**dadurch gekennzeichnet,**
**dass** die Wärmedämmmatte (23) anschließend an einen Abklappbereich einen Fortsetzungsbereich aufweist, welcher sich unterhalb des wärmeabgebenden Bauteils (10) erstreckt.

13. Waschmaschine nach einem der vorhergehenden Ansprüche, **gekennzeichnet, durch**
einen mit dem wärmeabgebenden Bauteil (10) zusammenwirkenden Strahlungsschirm.

14. Waschmaschine nach Anspruch 13,
**dadurch gekennzeichnet,**
**dass** der Strahlungsschirm eine Beschichtung (22) ist,
die außenseitig auf das Gehäuse (21) des wärmeabgebenden Bauteils (10) oder auf die Wärmedämmmatte (23), insbesondere die zum wärmeabgebenden Bauteil (10) zugewandte Seite eines Abklappbereichs der Wärmedämmmatte (23) aufgebracht ist,
oder dass der Strahlungsschirm ein zum wärmeabgebenden Bauteil (10) beabstandet angeordneter Reflektor (19) ist.

15. Waschmaschine nach Anspruch 13 oder 14,
**dadurch gekennzeichnet,**
**dass** der Strahlungsschirm derart angeordnet und ausgebildet ist, um vom wärmeabgebenden Bauteil (10) ausgesandte Wärmestrahlung in Richtung auf das wärmeabgebende Bauteil (10) und/oder die Ausnehmung (24) umzulenken.

## Claims

1. Washing machine, in particular a domestic dishwasher, comprising a washing/rinsing container (3) which provides a washing/rinsing chamber (4) and is used to receive items to be washed/rinsed, and to which insulation (23) is attached to at least one washing/rinsing container wall, in particular a lateral, top or bottom wall (25), on the outside, and comprising a component (10) which is arranged outside the washing/rinsing container (3) and emits heat at least temporarily during operation of the washing machine,
**characterised in that**
the insulation (23) has a recess (24) adjacent to the heat-emitting component (10) for the passage of the thermal radiation emitted by the component (10).

2. Washing machine according to claim 1,
**characterised in that**
the heat-emitting component (10) temporarily has a temperature of more than 100°C on the outside during operation of the washing machine.

3. Washing machine according to any of the preceding claims,
**characterised in that**
the heat-emitting component (10) is a compressor of a heat pump device (9).

4. Washing machine according to any of the preceding claims,
**characterised in that**
the recess (24) is arranged in the region of the orthogonal projection of the component (10) onto the washing/rinsing container wall.

5. Washing machine according to any of the preceding claims,
**characterised in that**
the distance between the recess (24) and the component (10) is less than 80 mm, in particular less than 30 mm, preferably between 5 mm and 20 mm.

6. Washing machine according to any of the preceding claims,
**characterised in that**
the area size of the recess (24) corresponds to one to three times the area of the orthogonal projection of the component (10) onto the washing/rinsing container wall, preferably **in that** the area size of the recess (24) is substantially the area of the orthogonal projection of the component (10) onto the washing/rinsing container wall.

7. Washing machine according to any of the preceding claims,
**characterised in that**
the washing/rinsing container (3) has a coating having a high emissivity, in particular an emissivity of at least 0.9, preferably at least 0.95, applied to the outside of the washing/rinsing container (3) in a region which overlaps with the recess (24).

8. Washing machine according to any of the preceding claims,
**characterised in that**
the insulation (23) is formed by a, in particular single-piece, thermal insulation mat.

9. Washing machine according to the preceding claim,
**characterised in that**
the thermal insulation mat (23) completely covers the bottom wall (25) of the washing/rinsing container (3), except in the region of the recess (24) and in the region of the collecting vessel (7).

10. Washing machine according to any of the preceding claims,
**characterised in that**
the thermal insulation mat (23) has a contact surface region with which said mat rests against the washing/rinsing container wall, and at least one fold-down region which extends along a direction pointing away from the washing/rinsing container wall.

11. Washing machine according to any of the preceding claims,
**characterised in that**
the fold-down region is arranged laterally with respect to the heat-emitting component (10), in particular **in that** fold-down regions of the thermal insulation mat (23) are arranged on a plurality of, preferably at least three sides of the heat-emitting component (10).

12. Washing machine according to any of the preceding claims,
**characterised in that**
the thermal insulation mat (23) has a continuation region attached to a fold-down region, which continuation region extends below the heat-emitting component (10).

13. Washing machine according to any of the preceding claims,
**characterised by**
a radiation shield which interacts with the heat-emitting component (10).

14. Washing machine according to claim 13,
**characterised in that**
the radiation shield is a coating (22) which is applied to the outside of the housing (21) of the heat-emitting component (10)
or is applied to the thermal insulation mat (23), in particular the face of a fold-down region of the thermal insulation mat (23) that faces the heat-emitting component (10),
or **in that** the radiation shield is a reflector (19) arranged at a distance from the heat-emitting component (10).

15. Washing machine according to either claim 13 or claim 14,
**characterised in that**
the radiation shield is arranged and designed in such a way as to deflect thermal radiation emitted by the heat-emitting component (10) in the direction of the heat-emitting component (10) and/or the recess (24).

## Revendications

1. Machine pour le lavage, en particulier lave-vaisselle domestique, comportant un récipient de lavage/rinçage (3) constituant un espace de lavage/rinçage (4) et servant à recevoir des articles à laver/rincer à nettoyer, et sur lequel est fixée une isolation (23) côté extérieur sur au moins une paroi de réservoir de lavage/rinçage, en particulier paroi latérale, supérieure ou inférieure (25), et comportant un composant (10) disposé à l'extérieur du récipient de lavage/rinçage (3) et émettant, au moins temporairement, de la chaleur pendant le fonctionnement de la machine pour le lavage,
**caractérisée en ce**
**que** l'isolation (23) présente un évidement (24) adjacent au composant (10) émetteur de chaleur pour le passage du rayonnement thermique émis par le composant (10).

2. Machine pour le lavage selon la revendication 1,
**caractérisée en ce**
**que** le composant (10) émetteur de chaleur présente temporairement une température de plus de 100 °C côté l'extérieur pendant le fonctionnement de la machine pour le lavage.

3. Machine pour le lavage selon l'une des revendications précédentes,
**caractérisée en ce**
**que** le composant (10) émetteur de chaleur est un compresseur d'un dispositif de pompe à chaleur (9).

4. Machine pour le lavage selon l'une des revendications précédentes,
**caractérisée en ce**
**que** l'évidement (24) est disposé sur la paroi de récipient de lavage/rinçage, dans la zone de la projection orthogonale du composant (10).

5. Machine pour le lavage selon l'une des revendications précédentes,
**caractérisée en ce**
**que** la distance entre l'évidement (24) et le composant (10) est inférieure à 80 mm, en particulier inférieure à 30 mm, de préférence comprise entre 5 mm et 20 mm.

6. Machine pour le lavage selon l'une des revendications précédentes,
**caractérisée en ce**
**que** la dimension de surface de l'évidement (24) correspond à une à trois fois la surface de la projection orthogonale du composant (10) sur la paroi de récipient de lavage/rinçage, de préférence en ce que la dimension de surface de l'évidement (24) correspond sensiblement à la surface de la projection orthogonale du composant (10) sur la paroi de récipient de lavage/rinçage.

7. Machine pour le lavage selon l'une des revendications précédentes,
**caractérisée en ce**
**que** le récipient de lavage/rinçage (3) possède un revêtement à haut degré d'émission, en particulier à un degré d'émission d'au moins 0,9, de préférence d'au moins 0,95, appliqué côté extérieur sur le récipient de lavage/rinçage (3), dans une zone de recouvrement avec l'évidement (24).

8. Machine pour le lavage selon l'une des revendications précédentes,
**caractérisée en ce**
**que** l'isolation (23) est formée par un tapissage d'isolation thermique, en particulier d'un seul tenant.

9. Machine pour le lavage selon la revendication précédente,
**caractérisée en ce**
**que** le tapissage d'isolation thermique (23) recouvre entièrement la paroi inférieure (25) du récipient de lavage/rinçage (3), à l'exception de la zone de l'évidement (24) et de la zone du bac collecteur (7).

10. Machine pour le lavage selon l'une des revendications précédentes,
**caractérisée en ce**
**que** le tapissage d'isolation thermique (23) présente une zone de surface de contact avec laquelle il repose contre la paroi de récipient de lavage/rinçage, et au moins une zone de rabattement qui s'étend le long d'une direction s'éloignant de la paroi de récipient de lavage/rinçage.

11. Machine pour le lavage selon l'une des revendications précédentes,
**caractérisée en ce**
**que** la zone de rabattement est disposée sur le côté du composant (10) émetteur de chaleur, en particulier que les zones de rabattement du tapissage d'isolation thermique (23) sont disposées sur plusieurs, de préférence au moins trois, côtés du composant (10) émetteur de chaleur.

12. Machine pour le lavage selon l'une des revendications précédentes,
**caractérisée en ce**
**que** le tapissage d'isolation thermique (23) présente, à la suite d'une zone de rabattement, une zone de prolongement qui s'étend en dessous du composant (10) émetteur de chaleur.

13. Machine pour le lavage selon l'une des revendications précédentes,
**caractérisée par**
un blindage anti-rayonnement coopérant avec le composant (10) émetteur de chaleur.

14. Machine pour le lavage selon la revendication 13,
**caractérisée en ce**
**que** le blindage anti-rayonnement est un revêtement (22) qui est appliqué côté extérieur sur le boîtier (21) du composant (10) émetteur de chaleur ou sur le tapissage d'isolation thermique (23), en particulier sur le côté d'une zone de rabattement du tapissage d'isolation thermique (23) tourné vers le composant (10) émetteur de chaleur,
ou que le blindage anti-rayonnement est un réflecteur (19) disposé à distance du composant (10) émetteur de chaleur.

15. Machine pour le lavage selon la revendication 13 ou 14,
**caractérisée en ce**
**que** le blindage anti-rayonnement est disposé et conçu de manière à dévier le rayonnement thermique émis par le composant (10) émetteur de chaleur en direction du composant (10) émetteur de chaleur et/ou de l'évidement (24).
